# FASCICULE DE BREVET EUROPEEN

(11) **EP 1 388 809 B1**
(45) Date de publication et mention de la délivrance du brevet: **11.11.2009**
(21) Numéro de dépôt: 02078301.5
(22) Date de dépôt: 08.08.2002
(51) Int. Cl.: G06K 19/07

(54) **Circuit électronique disposant de moyens de contrôle d'une tension**
Elektronische Schaltung mit Mitteln zur Spannungskontrolle
Electronic circuit comprising voltage control means

(43) Date de publication de la demande: 11.02.2004
(73) Titulaire: EM Microelectronic-Marin SA, 2074 Marin (CH)
(72) Inventeur: Hugues, Blangy, 2000 Neuchâtel (CH); Albin, Pevec, 9220 Lendava (SI)
(74) Mandataire: Surmely, Gérard

(56) Documents cités:
- EP-A- 0 296 414
- EP-A- 0 811 945
- US-A- 5 721 535
- US-A- 5 825 014

## Description

L'invention concerne un circuit électronique disposant de moyens de contrôle d'une tension. Le circuit électronique comprend une unité à microprocesseur, un oscillateur relié à l'unité à microprocesseur pour fournir des signaux d'horloge afin de cadencer des opérations traitées dans l'unité à microprocesseur, un régulateur de tension pour produire une tension régulée et des moyens de contrôle du niveau de la tension régulée ou de la tension d'alimentation du circuit électronique. Tous les éléments électroniques du circuit électronique peuvent être intégrés dans une même structure semi-conductrice.

De préférence, le circuit électronique de la présente invention est utilisé dans des cartes à puce, tels que des cartes bancaires. Lorsque la carte bancaire est introduite dans un appareil de lecture, tel qu'un appareil de distribution d'argent, des plages de contact électrique, reliées au circuit électronique de la carte bancaire, sont connectées à des contacteurs de l'appareil de lecture. Le circuit électronique de la carte est alimenté par une source d'alimentation électrique de l'appareil de lecture afin de pouvoir communiquer des données personnelles avec l'appareil de lecture. Cependant, le niveau de tension de la source d'alimentation peut être différent dans divers appareils de lecture.

Dans le brevet européen EP 0 296 414 B1, il est décrit une carte à circuit intégré qui comprend une batterie à énergie solaire. Des moyens sont prévus pour protéger la batterie à énergie solaire contre de l'électricité statique ou des tensions anormales apparaissant sur une tension d'alimentation fournie à des bornes de la carte. Pour ce faire, le circuit intégré comprend des moyens de détection du niveau de la tension d'alimentation externe. Quand le niveau de tension d'alimentation externe est supérieur à un seuil de tension déterminé, le circuit intégré est alimenté par cette tension d'alimentation. Par contre, quand le niveau de la tension d'alimentation externe est inférieur au seuil de tension, le circuit intégré est alimenté par la batterie à énergie solaire. Cependant les moyens de détection ne permettent pas d'agir sur certaines parties de régulation en fonction du niveau de tension détecté.

Un objet de la présente invention concerne donc un circuit électronique susceptible d'adapter certaines parties électroniques du circuit électronique en fonction du niveau détecté de la tension régulée ou du niveau d'une tension d'alimentation provenant notamment d'un appareil de lecture de carte à puce.

A cet effet, l'objet de l'invention concerne un circuit électronique cité ci-devant, qui se **caractérise en ce que** le régulateur de tension est configuré dans un premier mode de fonctionnement, quand le niveau de la tension d'alimentation, qui est contrôlé par les moyens de contrôle, est au-dessus d'un seuil de tension déterminé, ou dans un second mode de fonctionnement, quand le niveau de la tension d'alimentation est égal ou au-dessous du seuil de tension, le niveau de la tension régulée fournie par le régulateur dans le second mode de fonctionnement étant inférieur au niveau de la tension régulée dans le premier mode de fonctionnement.

A cet effet, l'objet de l'invention concerne également un circuit électronique cité ci-devant, qui se **caractérise en ce que** le régulateur de tension est configuré dans un premier mode de fonctionnement, quand le niveau de la tension régulée, qui est contrôlé par les moyens de contrôle, est au-dessus d'un seuil de tension déterminé, ou dans un second mode de fonctionnement, quand le niveau de la tension régulée dans le premier mode de fonctionnement est égal ou au-dessous du seuil de tension, le niveau de la tension régulée dans le second mode de fonctionnement étant inférieur au niveau de la tension régulée dans le premier mode de fonctionnement.

Un avantage du circuit électronique, selon l'invention, est que le régulateur est configuré automatiquement en fonction du niveau de la tension d'alimentation ou du niveau de la tension régulée par rapport à un seuil de tension déterminé. Si le niveau de la tension d'alimentation ou le niveau de la tension régulée est en dessus du seuil de tension déterminé, le régulateur produit une première tension régulée dans un premier mode de fonctionnement. Par contre, si le niveau de la tension d'alimentation ou le niveau de la tension régulée est en dessous du seuil de tension, alors le régulateur produit une seconde tension régulée dans un second mode de fonctionnement. Le niveau de la première tension régulée est plus élevé que le niveau de la seconde tension régulée.

Bien entendu, le passage de la première tension régulée à la seconde tension régulée est par exemple nécessaire quand le niveau de la tension d'alimentation est égal ou inférieur à la première tension régulée. Cependant, le circuit électronique va essayer à chaque mise sous tension d'avoir un régulateur de tension fournissant une première tension régulée, qui peut être égale à 2,5 V. Si le régulateur de tension n'est pas en mesure de réguler la tension à cette première valeur de tension régulée, la seconde tension régulée est fournie par le régulateur de tension. Cette seconde tension régulée peut être égale à 1,6 V.

Un autre avantage du circuit électronique, selon l'invention, est que le régulateur et l'oscillateur sont configurés dans un premier mode de fonctionnement ou dans un second mode de fonctionnement selon le niveau de la tension régulée. Ceci permet par exemple d'empêcher une personne mal intentionnée de venir forcer la tension régulée à un certain niveau par des pointes de test pour découvrir certaines données confidentielles.

De préférence, l'oscillateur est de type RC de manière à pouvoir être intégré dans une même structure semi-conductrice avec les autres éléments électroniques du circuit électronique, selon l'invention. L'oscillateur peut produire des signaux d'horloge avec une première fréquence, quand la tension d'alimentation est au-dessus d'un seuil de tension déterminé, ou avec une seconde fréquence, quand la tension d'alimentation est au-dessous du seuil de tension. La première fréquence peut être définie supérieure à la seconde fréquence. Avantageusement, la première fréquence est le double de la seconde fréquence.

Avantageusement, l'oscillateur de type RC comprend soit un bloc de résistances configurables par l'unité à microprocesseur, soit un bloc de condensateurs configurables. De cette façon indépendamment du changement du niveau de la tension régulée fournie par le régulateur, la fréquence des signaux d'horloge produits par l'oscillateur peut être modifiée. Pour configurer le bloc de résistances ou le bloc de condensateurs, l'unité à microprocesseur fournit un mot binaire audit bloc pour déterminer la valeur résistive ou capacitive du bloc configuré. Le changement de fréquence des signaux d'horloge peut être souhaité pour empêcher une analyse de chiffrement lorsque des données confidentielles sont traitées dans l'unité à microprocesseur.

Les buts, avantages et caractéristiques du circuit électronique apparaîtront mieux dans la description suivante de formes d'exécution illustrées par les dessins sur lesquels :
- les figures 1a et 1b représentent schématiquement deux variantes de réalisation du circuit électronique selon l'invention,
- la figure 2 représente des moyens de contrôle de tension d'alimentation pour le circuit électronique selon l'invention,
- la figure 3 représente un régulateur de tension à barrière de potentiel pour le circuit électronique selon l'invention
- la figure 4 représente un oscillateur configurable pour le circuit électronique selon l'invention, et
- la figure 5 représente un organigramme d'étapes d'un procédé de mise en action du circuit électronique pour l'adaptation de la tension régulée en fonction du niveau de la tension d'alimentation selon l'invention.

On va décrire ci-après un mode préféré de réalisation du circuit électronique destiné à être monté par exemple sur une carte à puce, telle qu'une carte bancaire. Bien entendu, les composants du circuit électronique, qui sont bien connus de l'homme du métier dans ce domaine technique ne seront pas décrits en détail.

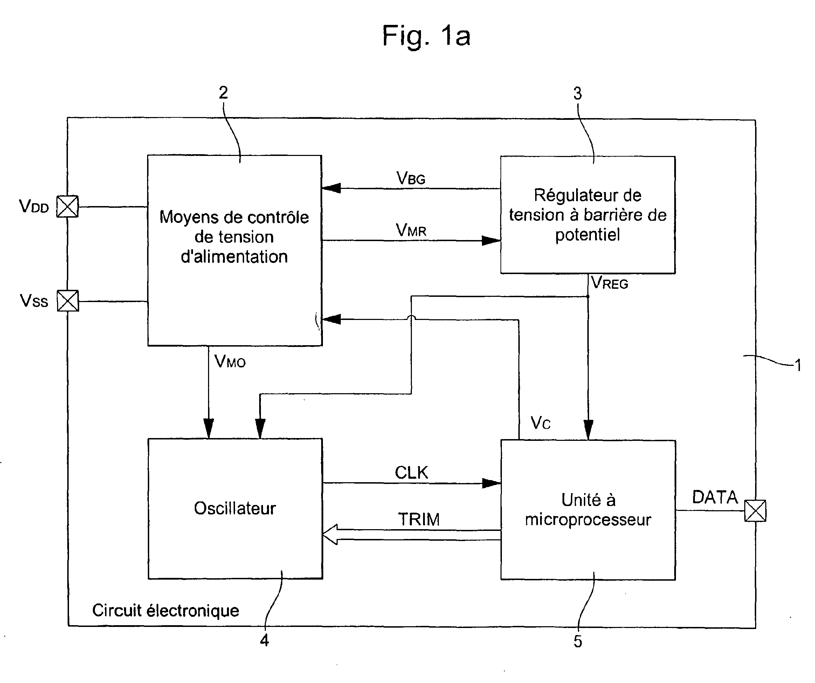

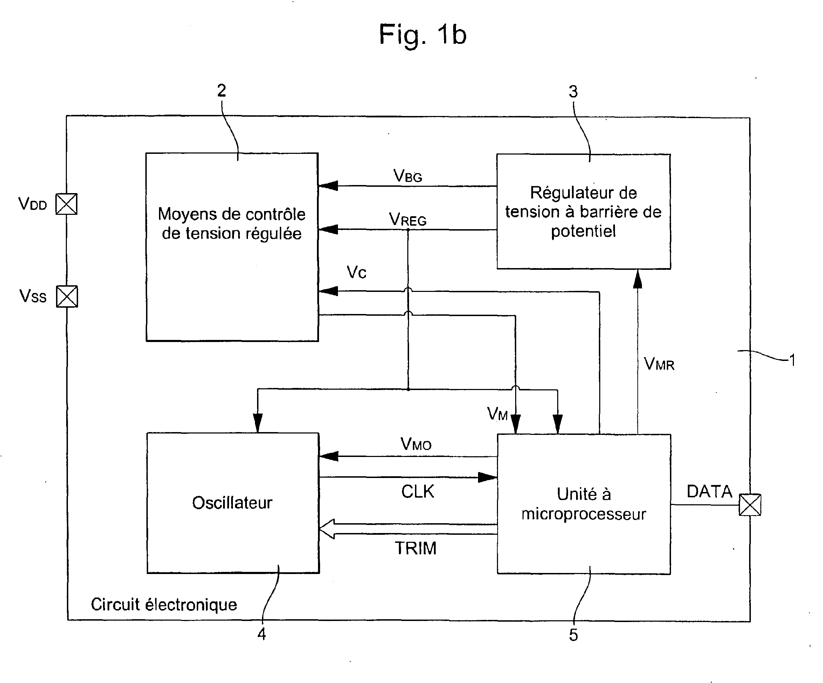

Le circuit électronique est représenté schématiquement selon deux variantes de réalisation aux figures 1a et 1b. Le circuit électronique 1 comprend notamment une unité à microprocesseur 5 et un oscillateur 4 relié à l'unité à microprocesseur pour fournir des signaux d'horloge CLK afin de cadencer des opérations traitées dans l'unité à microprocesseur. Le circuit électronique 1 comprend encore un régulateur de tension 3 pour fournir une tension régulée V_{REG} à l'oscillateur 4 et à l'unité à microprocesseur 5 et des moyens de contrôle 2 du niveau de la tension d'alimentation du circuit électronique (figure 1a) ou de la tension régulée (figure 1b).

L'unité à microprocesseur 3 comprend également au moins une mémoire non représentée dans laquelle des données confidentielles sont mémorisées. Ces données mémorisées sont par exemple un algorithme de chiffrement et des clés de chiffrement. Comme le circuit électronique 1 peut être monté sur une carte bancaire, des données DATA sont échangées entre la carte insérée dans un appareil de lecture et l'appareil de lecture. Cet échange de données est géré par l'unité à microprocesseur 5 du côté du circuit électronique 1 après des étapes de vérification d'identité.

Le circuit électronique 1 est alimenté par une source de tension d'alimentation de l'appareil de lecture. Comme le niveau de la tension d'alimentation de ladite source de tension n'est pas le même d'un appareil à l'autre, le circuit électronique 1 comprend des moyens de contrôle 2 du niveau de la tension d'alimentation ou de la tension régulée. Dans la première variante de réalisation montrée à la figure 1a, ces moyens de contrôle 2 sont reliés aux bornes V_{DD} et V_{SS} du circuit électronique pour la connexion à la source de tension d'alimentation. Dans la seconde variante de réalisation montrée à la figure 1b, ces moyens de contrôle 2 sont reliés aux bornes V_{REG} et V_{SS}.

En fonctionnement, un contrôle du niveau de la tension d'alimentation est réalisé par les moyens de contrôle 2 afin de fournir un signal de commande V_{MR} au régulateur de tension 3 dans la variante représentée à la figure 1a. Si le niveau de cette tension d'alimentation est au-dessus d'un seuil de tension, qui peut être fixé par exemple à 2,5 V, alors le signal de commande V_{MR} place le régulateur de tension dans un premier mode de fonctionnement pour la fourniture d'une première tension régulée. Cette première tension régulée peut être fixée à 2,5 V. Par contre si le niveau de la tension d'alimentation est égal ou inférieur au seuil de tension, alors le signal de commande V_{MR} place le régulateur de tension dans un second mode de fonctionnement pour la fourniture d'une seconde tension régulée. Cette seconde tension régulée peut être fixée à 1,6 V.

A la figure 1a, l'unité à microprocesseur 5 commande le fonctionnement des moyens de contrôle de tension d'alimentation par un signal d'enclenchement ou de déclenchement Vc. Ces moyens de contrôle 2 peuvent donc être fonctionnels dès la mise sous tension du circuit électronique 1 ou après les phases d'initialisation du circuit électronique. Toutefois, il n'est pas nécessaire que ces moyens de contrôle 2 du niveau de la tension d'alimentation soient tout le temps opérationnels quand le circuit électronique est alimenté. Une fois que le niveau de la source de tension a été contrôlé supérieur au seuil de tension, ces moyens de contrôle peuvent être déconnectés.

Un signal de commande V_{MO} des moyens de contrôle 2 est également fourni à l'oscillateur dans la variante représentée à la figure 1a. Ce signal de commande V_{MO}, qui peut être le même que le signal de commande V_{MR} transmis au régulateur de tension 3, permet de placer l'oscillateur dans un premier mode de fonctionnement ou dans un second mode de fonctionnement. Ce signal de commande V_{MO} est par exemple à l'état haut, c'est-à-dire proche de la valeur de la tension régulée V_{REG} dans le premier mode, et à l'état bas proche de V_{SS} à 0 V dans le second mode.

Dans le premier mode de fonctionnement quand le niveau de tension d'alimentation est supérieur au seuil de tension, l'oscillateur 4 produit des signaux d'horloge CLK à une première fréquence. Dans le second mode de fonctionnement quand le niveau de tension d'alimentation est inférieur au seuil de tension, l'oscillateur produit des signaux d'horloge à une seconde fréquence. De préférence, la première fréquence peut être fixée à 30 MHz, alors que la seconde fréquence peut être fixée à 15 MHz. Ce passage d'une première fréquence élevée à une seconde fréquence moins élevée peut permettre de réduire la consommation du circuit électronique dans le cas où la source d'alimentation est un accumulateur ou une pile.

Il est à noter que l'oscillateur 4 produit des signaux d'horloge CLK dont la fréquence ne dépend pas en principe du niveau de la tension régulée fournie par le régulateur 3. Cependant en fonction du niveau de tension d'alimentation contrôlé, l'oscillateur est alimenté soit par une première tension régulée à 2,5 V, soit par une seconde tension régulée à 1,6 V.

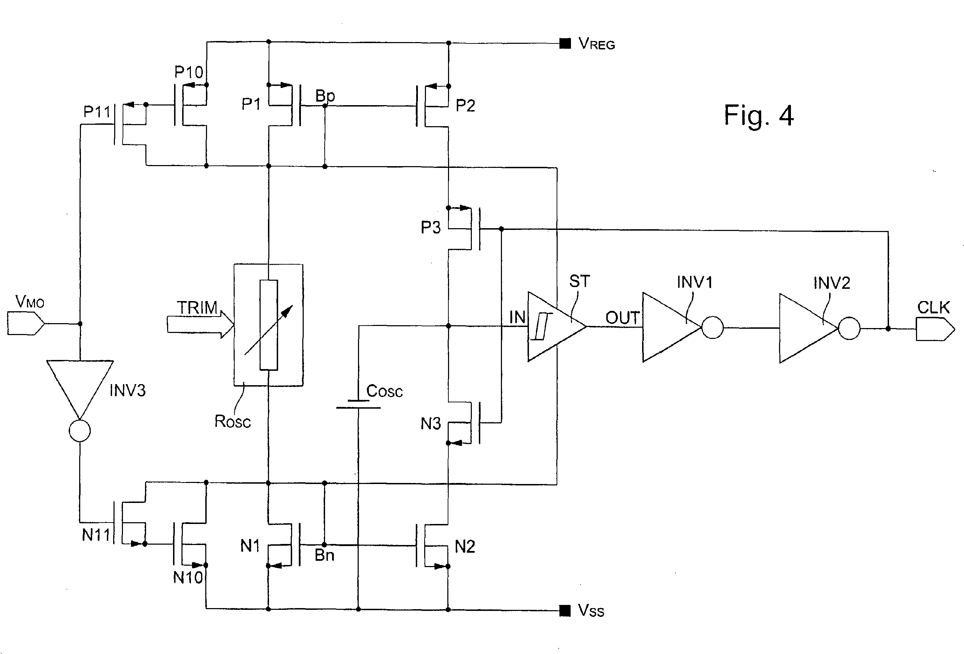

Comme l'oscillateur est de préférence un oscillateur du type RC, la fréquence des signaux d'horloge CLK peut également être modifiée par un mot binaire TRIM fourni par l'unité à microprocesseur 5. Ce mot binaire permet de configurer un bloc de résistances ou un bloc de condensateurs de l'oscillateur définissant la fréquence desdits signaux d'horloge. L'oscillateur de type RC est expliqué ci-après en référence à la figure 4.

Dans la seconde variante de réalisation du circuit électronique présentée à la figure 1b, c'est le niveau de la tension régulée qui est contrôlé par les moyens de contrôle 2. Ceci permet de surveiller le niveau de la tension régulée en fonction du niveau de la tension d'alimentation ou également dans le cas où cette tension régulée est forcée à un certain niveau par une personne mal intentionnée.

Normalement à la mise sous tension du circuit électronique, le régulateur de tension va essayer dans un premier mode de fonctionnement de fournir une tension régulée à une valeur par exemple de 2,5 V. Cependant le niveau de la tension régulée dans ce premier mode de fonctionnement du régulateur peut descendre jusqu'à un seuil de tension déterminé, si la tension d'alimentation n'est plus suffisante. Par exemple, il peut être prévu que cette tension régulée descende jusqu'à une valeur de 2,2 V avant que le régulateur de tension passe automatiquement du premier mode de fonctionnement à un second mode de fonctionnement. Dans ce second mode de fonctionnement, le régulateur peut fournir une tension régulée par exemple égale à 1,6 V. Pour ce faire, les moyens de contrôle 2 du niveau de la tension régulée fournissent un signal de commande V_{M} à l'unité à microprocesseur 5. Ce signal de commande V_{M} est dépendant du niveau de la tension régulée comparativement au seuil de tension déterminé. En fonction d'une programmation effectuée dans l'unité à microprocesseur, des signaux de commande V_{MR} et V_{MO} peuvent être fournis au régulateur 3 et à l'oscillateur 4. Toutefois, l'unité à microprocesseur 5 peut décider de ne fournir que le signal de commande V_{MR} au régulateur de tension après un laps déterminé après la mise sous tension du circuit électronique.

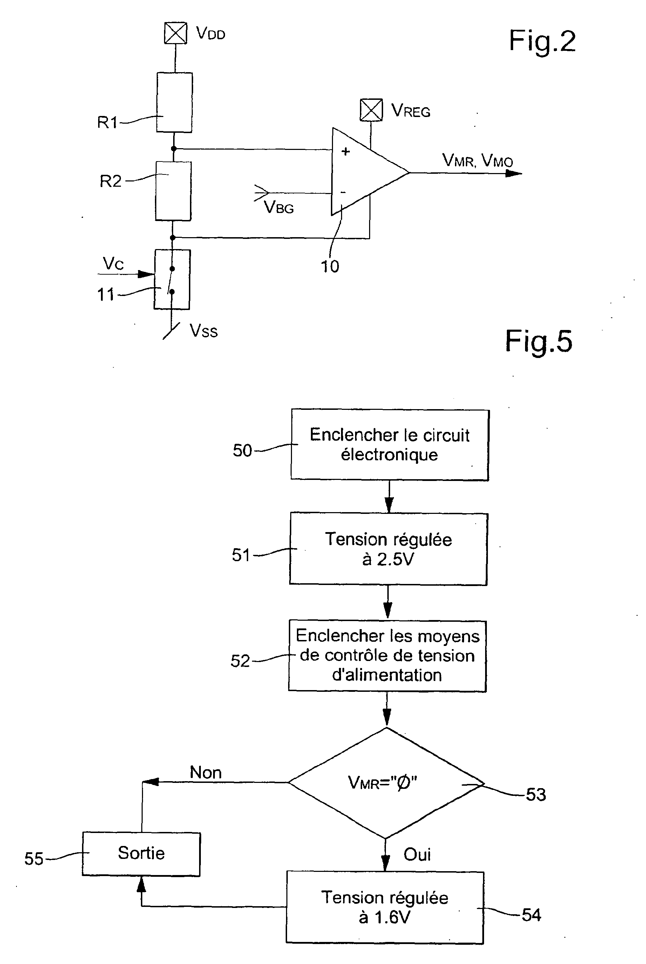

Une forme d'exécution des moyens de contrôle du niveau de la tension d'alimentation est montrée à la figure 2 notamment pour la première variante de réalisation présentée à la figure 1a. Ces moyens de contrôle comprennent notamment un diviseur résistif R1 et R2 branché entre les bornes V_{DD} et V_{SS}, et un comparateur 10 alimenté par la tension régulée V_{REG}. La borne négative du comparateur 10 reçoit une tension de référence V_{BG} provenant du régulateur de tension, alors que la borne positive du comparateur 10 est branchée à la connexion des résistances R1 et R2 du diviseur résistif. La tension de référence V_{BG} est une référence de tension à barrière de potentiel, qui est proche de 1,2 V. De ce fait, la valeur des résistances doit être choisie de manière que le signal de commande V_{MR} ou V_{MO} en sortie du comparateur soit à l'état haut quand la tension d'alimentation est par exemple supérieure à la tension seuil de 2,5 V, ou à l'état bas quand la tension d'alimentation est inférieure ou égale à cette tension seuil de 2,5 V. Bien sûr, un autre seuil de tension peut être défini par des valeurs de résistances différentes.

Les moyens de contrôle comprennent encore un interrupteur 11 placé entre la borne Vss et la borne négative de la résistance R2, qui est reliée à la borne d'alimentation négative du comparateur 10. Cet interrupteur 11 est commandé par un signal d'enclenchement ou de déclenchement V_{C} fourni par l'unité à microprocesseur pour connecter ou déconnecter les moyens de contrôle lorsque la tension d'alimentation est notamment supérieure à 2,5 V.

Pour la seconde variante de réalisation présentée à la figure 1b, une même forme d'exécution des moyens de contrôle montrée à la figure 2 peut être utilisée. Cependant, le diviseur résistif des moyens de contrôle doit être branché entre les bornes V_{REG} et V_{SS}. Dans ce cas, la tension V_{BG} reste fixe alors que le niveau de la tension régulée dans le premier mode de fonctionnement peut décroître, comme la tension d'alimentation par exemple, jusqu'à un seuil de tension déterminé. Ce seuil de tension peut être inférieur par exemple à 2,5 V. Dès que le seuil de tension déterminé est atteint par la tension régulée, le signal de commande V_{M} des moyens de contrôle change d'état afin de placer le régulateur de tension dans son second mode de fonctionnement.

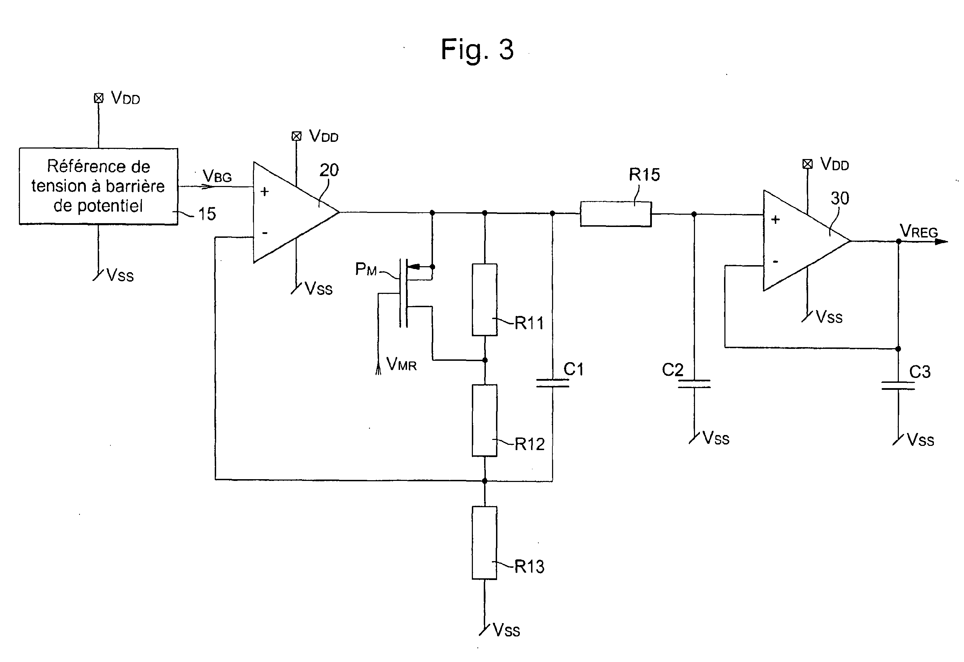

La figure 3 montre une forme d'exécution du régulateur de tension à barrière de potentiel. Le régulateur de tension comprend notamment un bloc 15 de référence de tension à barrière de potentiel branché aux bornes V_{DD} et V_{SS} de la source d'alimentation. Ce bloc 15 produit une tension de référence V_{BG} dont la valeur est proche de 1,2 V (potentiel de la bande interdite). Ce bloc 15 ne sera pas expliqué en détail, car il fait partie des connaissances générales d'un homme du métier dans ce domaine technique.

Le régulateur comprend un amplificateur opérationnel 20 branché aux bornes V_{DD} et V_{SS} et trois résistances R11, R12 et R13 qui sont connectées en série entre la sortie de l'amplificateur 20 et la masse V_{SS}. La borne positive de l'amplificateur est connectée à la sortie du bloc 15 pour recevoir la tension de référence V_{BG}, alors que la borne négative de l'amplificateur 20 est connectée entre les résistances R12 et R13. Par ce branchement de l'amplificateur et des résistances, le niveau de tension en sortie de cet amplificateur définit le niveau de la tension régulée du régulateur. Avec les trois résistances R11, R12 et R13 branchées en sortie de l'amplificateur, le niveau de la tension régulée est par exemple fixé à 2,5 V.

Pour obtenir une tension régulée à un niveau inférieur, par exemple à 1,6 V, il est nécessaire de court-circuiter une des résistances R11 ou R12. Pour ce faire, le drain et la source d'un transistor PMOS Pm sont branchés par exemple aux bornes de la résistance R11. La grille de ce transistor reçoit le signal de commande V_{MR} fourni directement par les moyens de contrôle du niveau de la tension d'alimentation ou par l'unité à microprocesseur. Lorsque le signal de commande V_{MR} est à l'état bas pour une tension d'alimentation inférieure ou égale à 2,5 V, le transistor Pm est conducteur et court-circuite la résistance R11. Par contre, lorsque le signal de commande V_{MR} est à l'état haut pour une tension d'alimentation supérieure à 2,5 V, le transistor Pm n'est pas conducteur.

Comme les trois résistances ont un coefficient thermique identique, la température n'a aucune influence sur le niveau de la tension régulée. De plus, un condensateur C1 peut être branché entre la borne négative de l'amplificateur 20 et sa sortie pour servir de filtre avec les résistances R11, R12 et R13 lors de la commutation de tension en sortie de l'amplificateur.

Pour la fourniture de la tension régulée V_{REG}, le régulateur comprend également un suiveur de tension 30. Un filtre passe-bas, qui est constitué par la résistance R15 et le condensateur C2, est branché entre la sortie de l'amplificateur 20 et la borne positive de l'amplificateur opérationnel 30 monté en suiveur de tension. Finalement, un condensateur C3 est branché entre la sortie de l'amplificateur 30 et la masse V_{SS}.

A la figure 4, un oscillateur de type RC pour le circuit électronique est représenté. Cet oscillateur comprend principalement un bloc de résistances configurables Rosc, au moins un condensateur Cosc, et un circuit à déclenchement bistable ST (Schmitt Trigger circuit en terminologie anglaise). Le circuit à déclenchement bistable convertit les signaux triangulaires de charge et de décharge du condensateur Cosc en des signaux à impulsions rectangulaires pour fournir des signaux d'horloge CLK.

Le bloc de résistances Rosc est placé en série entre un premier miroir de courant P1, P2 connecté à la borne positive V_{REG} du régulateur, et un second miroir de courant N1, N2 connecté à une borne négative V_{SS}. Le bloc de résistances, dans la branche de référence des miroirs de courant, permet de générer une première source de courant de charge du condensateur par le premier miroir de courant, et une seconde source de courant de décharge du condensateur par le second miroir de courant. Les sources de courant sont enclenchées alternativement par des éléments de commutation N3 et P3 qui seront expliqués ci-après. La valeur du courant de charge est égale à la valeur du courant de décharge.

Pour définir la valeur des courants de charge et de décharge du condensateur, le bloc de résistances est configuré par un mot binaire TRIM qui a été placé dans un registre non représenté sur la figure 4. Ce mot binaire peut être introduit par exemple par une unité à microprocesseur du circuit électronique.

Dans le domaine technique des cartes bancaires, il peut être souhaité que la fréquence des signaux d'horloge produits par l'oscillateur varie de façon aléatoire pour protéger certaines parties à caractère confidentiel. Pour ce faire, le mot binaire peut être déterminé de façon aléatoire. Un générateur de nombres aléatoires non illustré peut fournir des nombres aléatoires sur demande de l'unité à microprocesseur afin de fournir le mot binaire TRIM à l'oscillateur.

Le bloc de résistances est arrangé pour placer un certain nombre de résistances sélectionnables en parallèle et/ou en série grâce à des éléments de commutation tels que des transistors NMOS ou PMOS non représentés. La grille de chaque transistor peut être commandée par une tension en fonction du mot binaire TRIM reçu depuis le registre de manière à rendre le transistor correspondant conducteur ou non conducteur, et à brancher des résistances en parallèle et/ou en série. Ce bloc ne sera cependant pas décrit de manière plus détaillée, car il fait partie des connaissances générales d'un homme du métier dans ce domaine technique. La valeur de résistances choisie par le mot binaire TRIM détermine avec un condensateur Cosc en partie la fréquence des signaux d'horloge CLK produits par l'oscillateur.

Bien entendu, il peut être imaginé aussi que le condensateur Cosc est remplacé par un bloc de condensateurs configurable par le mot binaire TRIM pour modifier la fréquence des signaux d'horloge CLK.

En fonctionnement normal, l'oscillateur peut être configuré par des mots binaires TRIM de manière à produire des signaux d'horloge, tels que des signaux d'horloge, dont la fréquence se situe dans une gamme de fréquence pouvant aller de 13 à 30 MHz.

En fonctionnement normal, le premier miroir de courant comprend des premier et second transistors PMOS P1 et PMOS P2. Dans la branche de référence, la grille Bp et le drain du premier transistor P1 sont connectés à une borne positive du bloc de résistances Rosc, et la source du transistor P1 est reliée à la borne V_{REG}. La grille du second transistor P2 est reliée à la grille Bp du premier transistor P1, et la source du second transistor P2 est reliée à la borne V_{REG}. Le drain du second transistor est relié à la source d'un troisième transistor PMOS P3 qui est utilisé comme un élément de commutation pour enclencher ou bloquer la source de courant de charge.

En fonctionnement normal, le second miroir de courant comprend des premier et second transistors NMOS N1 et NMOS N2. Dans la branche de référence, la grille Bn et le drain du premier transistor N1 sont connectés à une borne négative du bloc de résistances Rosc, et la source du premier transistor N1 est reliée à la borne V_{SS}. La grille du second transistor N2 est reliée à la grille Bn du premier transistor N1, et la source du second transistor N2 est reliée à la borne V_{SS}. Le drain du second transistor N2 est relié à la source d'un troisième transistor NMOS N3 qui est utilisé comme un élément de commutation pour enclencher ou bloquer la source de courant de décharge.

Les troisièmes transistors P3 et N3 ont chacun leur drain connecté à une borne positive du condensateur Cosc, dont la borne négative est reliée à V_{SS}. Les grilles des deux troisièmes transistors P3 et N3 sont reliées ensemble. Si le potentiel des grilles P3 et N3, reliées à la sortie des signaux d'horloge CLK, est proche de V_{DD}, le transistor P3 est bloqué, alors que le transistor N3 devient conducteur pour laisser passer le courant dupliqué du second miroir de courant. Le condensateur Cosc se décharge donc grâce au courant dupliqué dans le second miroir de courant dépendant du bloc de résistances configuré Rosc. Si le potentiel des grilles des transistors P3 et N3, reliées à la sortie des signaux d'horloge CLK, est proche de V_{SS}, le transistor N3 est bloqué, alors que le transistor P3 devient conducteur pour laisser passer le courant dupliqué par le premier miroir de courant. Le condensateur Cosc se charge donc grâce au courant dupliqué dans le premier miroir de courant dépendant du bloc de résistances configuré Rosc.

Les signaux triangulaires de charge et de décharge du condensateur Cosc sont convertis en des signaux à impulsions rectangulaires par le circuit à déclenchement bistable ST. L'entrée IN de ce circuit ST est connectée à la borne positive du condensateur Cosc, ainsi qu'aux drains des transistors P3 et N3, alors que la sortie OUT de ce circuit ST est connectée à deux inverseurs en série INV1 et INV2. Les signaux d'horloge CLK à impulsions de forme sensiblement rectangulaire sont fournis, par exemple, à la sortie du deuxième inverseur INV2. Il est à noter qu'un certain retard de transition des signaux entre la sortie OUT et la sortie CLK est réalisée grâce aux deux inverseurs INV1 et INV2.

La sortie OUT du circuit à déclenchement bistable ST est à l'état haut lors de la décharge du condensateur Cosc. Dans ce cas, le transistor N3 est conducteur, tandis que le transistor P3 est bloqué. Ainsi, le courant dupliqué par le second miroir de courant dans le second transistor N2 décharge le condensateur Cosc. Cette décharge de Cosc se fait jusqu'à ce que le potentiel dudit condensateur Cosc atteigne un premier niveau de seuil bas détecté par le circuit ST sur l'entrée IN. Dès que le potentiel du condensateur Cosc atteint le premier niveau de seuil, la sortie OUT du circuit ST passe à l'état bas. Dès cet instant, la transition des signaux à la sortie OUT du circuit ST impose une transition des signaux d'horloge CLK de l'état haut à l'état bas.

Le passage des signaux d'horloge CLK de l'état haut à l'état bas va permettre de bloquer le transistor N3 et d'ouvrir le transistor P3. Cela permet de charger le condensateur Cosc à l'aide du courant dupliqué dans le premier miroir de courant dans le transistor P2. Le condensateur Cosc va donc se charger jusqu'à ce que le potentiel dudit condensateur Cosc atteigne un second niveau de seuil haut détecté par le circuit ST sur l'entrée IN. Dès que le potentiel du condensateur Cosc a atteint le second niveau de seuil, la sortie OUT du circuit ST passe à l'état haut. Dès cet instant, la transition des signaux à la sortie OUT du circuit ST impose une transition des signaux d'horloge CLK de l'état bas à l'état haut.

Comme indiqué ci-dessus, l'oscillateur peut fonctionner également dans un second mode lorsque la tension d'alimentation est en dessous d'une tension seuil déterminée comme expliqué en référence à la figure 2. Dans ce cas, un transistor complémentaire PMOS P10 doit être connecté en parallèle avec le premier transistor P1 du premier miroir de courant, et un transistor complémentaire NMOS N10 doit être connecté en parallèle avec le premier transistor N1 du second miroir de courant.

Pour pouvoir connecter le transistor P10 en parallèle avec le transistor P1, un transistor PMOS P11 d'un bloc de connexion, connecté entre la grille et le drain du transistor P10, doit être conducteur. De même pour pouvoir connecter le transistor N10 en parallèle avec le transistor N1, un transistor NMOS N11 du bloc de connexion, connecté entre la grille et le drain du transistor N10, doit être également conducteur. Pour ce faire, un signal de commande V_{MO} doit passer d'un état haut proche de V_{REG} à un état bas proche de V_{SS}. Ainsi, le potentiel de grille du transistor N11 est proche de V_{REG} et le potentiel de grille du transistor P11 est proche de V_{SS} grâce à un troisième inverseur INV3 du bloc de connexion, connecté entre la borne de fourniture du signal de commande V_{MO} et la grille du transistor N11. Les deux transistors P11 et N11 sont conducteurs quand le signal de commande V_{MO} est à l'état bas.

Le rapport de la largeur sur la longueur du canal des transistors N10 et respectivement P10 peut être égal au rapport de la largeur sur la longueur du canal des transistors N1 et respectivement P1. Ainsi lors de la connexion des transistors N10 et P10 avec les transistors N1 et P1, la fréquence des signaux d'horloge CLK vaut la moitié de la fréquence des signaux d'horloge CLK quand les transistors N10 et P10 ne sont pas connectés. A la première valeur de tension régulée, la fréquence des signaux d'horloge peut être fixée à 30 MHz, alors qu'à la seconde valeur de tension régulée, la fréquence des signaux d'horloge CLK peut être fixée à 15 MHz.

Les étapes du procédé de mise en action du circuit électronique pour le contrôle du niveau de la tension d'alimentation sont expliquées ci-après en référence à la figure 5.

A l'étape 50, le circuit électronique de la carte à puce est alimenté par une source d'alimentation de valeur non spécifiée. Le régulateur de tension à barrière de potentiel va essayer après les phases d'initialisation du circuit électronique de fournir une valeur de tension régulée de 2,5 V à l'étape 51. Par la suite, l'unité à microprocesseur va commander l'enclenchement des moyens de contrôle de tension d'alimentation à l'étape 52. Il est à noter que la commande d'enclenchement de ces moyens de contrôle peut également être effectuée dès la mise sous tension du circuit électronique. Après cette étape 52, les moyens de contrôle de la tension d'alimentation vont contrôler si le niveau de la tension d'alimentation est au-dessus ou au-dessous d'un seuil de tension déterminé à l'étape 53. Si la tension d'alimentation est au-dessus du seuil de tension déterminé défini par la commande V_{MR} différente de "0", la tension régulée reste à 2,5 V. Par contre, si la tension d'alimentation est au-dessous du seuil de tension déterminé, la tension régulée est fixée à 1,6 V à l'étape 54 avant de sortir à l'étape 55 des étapes de contrôle de la tension d'alimentation.

Il peut être encore prévu que les moyens de contrôle de tension d'alimentation ou de tension régulée soient tout le temps opérationnels de manière à surveiller si la tension d'alimentation chute en dessous du seuil de tension déterminé afin d'imposer au régulateur de fournir une tension régulée plus basse.

## Revendications

1. Circuit électronique comprenant une unité à microprocesseur (5), un oscillateur (4) relié à l'unité à microprocesseur pour fournir des signaux d'horloge (CLK) afin de cadencer des opérations traitées dans l'unité à microprocesseur, un régulateur de tension (3) pour fournir une tension régulée (V_{REG}), et des moyens de contrôle (2) du niveau de la tension d'alimentation du circuit électronique, **caractérisé en ce que** le régulateur de tension (3) est configuré dans un premier mode de fonctionnement, quand le niveau de la tension d'alimentation, qui est contrôlé par les moyens de contrôle (2), est au-dessus d'un seuil de tension déterminé, ou dans un second mode de fonctionnement, quand le niveau de la tension d'alimentation est égal ou au-dessous du seuil de tension, le niveau de la tension régulée (V_{REG}) fournie par le régulateur dans le second mode de fonctionnement étant inférieur au niveau de la tension régulée dans le premier mode de fonctionnement, et **en ce que** les moyens de contrôle (2) fournissent au moins un signal de commande (V_{M}, V_{MR}, V_{MO}), directement ou par l'intermédiaire de l'unité à microprocesseur (5), pour configurer le régulateur de tension (3) et l'oscillateur (4) de manière que la fréquence des signaux d'horloge (CLK) produits par l'oscillateur soit à une première fréquence dans le premier mode de fonctionnement, ou à une seconde fréquence dans le second mode de fonctionnement, la première fréquence étant plus élevée que la seconde fréquence.

2. Circuit électronique comprenant une unité à microprocesseur (5), un oscillateur (4) relié à l'unité à microprocesseur pour fournir des signaux d'horloge (CLK) afin de cadencer des opérations traitées dans l'unité à microprocesseur, un régulateur de tension (3) pour fournir une tension régulée (V_{REG}), et des moyens de contrôle (2) du niveau de la tension régulée, **caractérisé en ce que** le régulateur de tension (3) est configuré dans un premier mode de fonctionnement, quand le niveau de la tension régulée (V_{REG}), qui est contrôlé par les moyens de contrôle (2), est au-dessus d'un seuil de tension déterminé, ou dans un second mode de fonctionnement, quand le niveau de la tension régulée dans le premier mode de fonctionnement est égal ou au-dessous du seuil de tension, le niveau de la tension régulée dans le second mode de fonctionnement étant inférieur au niveau de la tension régulée dans le premier mode de fonctionnement, et **en ce que** les moyens de contrôle (2) fournissent au moins un signal de commande (V_{M}, V_{MR}, V_{MO}), directement ou par l'intermédiaire de l'unité à microprocesseur (5), pour configurer le régulateur de tension (3) et l'oscillateur (4) de manière que la fréquence des signaux d'horloge (CLK) produits par l'oscillateur soit à une première fréquence dans le premier mode de fonctionnement, ou à une seconde fréquence dans le second mode de fonctionnement, la première fréquence étant plus élevée que la seconde fréquence.

3. Circuit selon l'une des revendications 1 et 2 destiné à être monté sur une carte à puce, **caractérisé en ce que** l'unité à microprocesseur (5) fournit un signal d'enclenchement ou de déclenchement (V_{C}) aux moyens de contrôle (2) de manière à rendre fonctionnels ou non fonctionnels lesdits moyens de contrôle (2) lorsque le circuit électronique est alimenté par une source d'alimentation d'un appareil de lecture d'une carte à puce.

4. Circuit selon l'une des revendications 1 et 2, **caractérisé en ce que** l'oscillateur est un oscillateur du type RC, qui est intégré avec tous les éléments électroniques du circuit électronique dans une même structure semi-conductrice.

5. Circuit selon la revendication 4, **caractérisé en ce que** l'oscillateur (4) comprend un bloc de résistances (Rosc) configurable par un mot binaire (TRIM) fourni par l'unité à microprocesseur (5) afin de modifier la valeur de courant de sources de courant de charge et de décharge d'un condensateur (Cosc) pour adapter la fréquence des signaux d'horloge (CLK) produits par l'oscillateur.

6. Circuit selon la revendication 5, **caractérisé en ce que** l'unité à microprocesseur (5) est programmée pour fournir successivement à l'oscillateur (4) des mots binaires (TRIM) définis aléatoirement à des intervalles temporels différents pour que la fréquence des signaux d'horloge (CLK) change en fonction de chaque mot binaire (TRIM) reçu.

7. Circuit selon la revendication 1, **caractérisé en ce que** les moyens de contrôle (2) comprennent un diviseur résistif (R1, R2) destiné à être connecté aux bornes (V_{DD}, V_{SS}) d'une source d'alimentation électrique, et un comparateur (10) fournissant au moins un signal de commande (V_{M}, V_{MO}, V_{MR}) en fonction de la comparaison entre une tension de référence (V_{BG}) provenant du régulateur de tension (3) et une tension de sortie du diviseur résistif, le niveau de tension du signal de commande étant dans un premier état haut quand le niveau de la tension d'alimentation est au-dessus du seuil de tension déterminé, et étant dans un second état bas quand le niveau de la tension d'alimentation est égal ou au-dessous du seuil de tension déterminé.

8. Circuit selon la revendication 2, **caractérisé en ce que** les moyens de contrôle (2) comprennent un diviseur résistif (R1, R2) relié entre une borne de fourniture de tension régulée (V_{REG}) du régulateur de tension (3) et une borne de masse (V_{SS}), et un comparateur (10) fournissant au moins un signal de commande (V_{M}, V_{MO}, V_{MR}) en fonction de la comparaison entre une tension de référence (V_{BG}) provenant du régulateur de tension (3) et une tension de sortie du diviseur résistif, le niveau de tension du signal de commande étant dans un premier état haut quand le niveau de la tension régulée est au-dessus du seuil de tension déterminé, et étant dans un second état bas quand le niveau de la tension régulée est égal ou au-dessous du seuil de tension déterminé.

9. Circuit selon l'une des revendications 7 et 8, **caractérisé en ce que** l'oscillateur du type RC (4) comprend des sources de courants de charge et de décharge d'un condensateur (Cosc), **en ce que** la valeur des courants de charge et de décharge dépend du niveau de tension du signal de commande (V_{MO}) fourni à l'oscillateur, la valeur des courants de charge et de décharge étant plus élevée quand le signal de commande est à l'état haut, que quand le signal de commande est à l'état bas, pour que la fréquence des signaux d'horloge (CLK) produits par l'oscillateur soit dépendante du niveau de ce signal de commande.

10. Circuit selon l'une revendications 7 et 8, **caractérisé en ce qu'**au moins un interrupteur (11) commandé par un signal d'enclenchement ou de déclenchement (V_{C}) fourni par l'unité à microprocesseur (5) est placé au moins dans le diviseur résistif afin de connecter ou déconnecter les moyens de contrôle (2).

## Claims

1. Electronic circuit including a microprocessor unit (5), an oscillator (4) connected to the microprocessor unit for supplying clock signals (CLK) to clock operations processed in the microprocessor unit, a voltage regulator (3) for supplying a regulated voltage (V_{REG}), and means (2) for monitoring the level of the electronic circuit supply voltage, **characterized in that** the voltage regulator (3) is configured in a first operating mode, when the supply voltage level, which is monitored by the monitoring means (2), is above a determined voltage threshold, or in a second operating mode, when the supply voltage level is equal to or below the voltage threshold, the level of the regulated voltage (V_{REG}) supplied by the regulator in the second operating mode being lower than the level of the regulated voltage in the first operating mode, and **in that** the monitoring means (2) supply at least one control signal (V_{M}, V_{MR}, V_{MO}) directly or via the microprocessor unit (5), to configure the voltage regulator (3) and the oscillator (4) so that the frequency of the clock signals (CLK) produced by the oscillator is at a first frequency in the first operating mode, or at a second frequency in the second operating mode, the first frequency being higher than the second frequency.

2. Electronic circuit including a microprocessor unit (5), an oscillator (4) connected to the microprocessor unit (5) for supplying clock signals (CLK) to clock operations processed in the microprocessor unit, a voltage regulator (3) for supplying a regulated voltage (V_{REG}), and means (2) for monitoring the level of the regulated voltage, **characterized in that** the voltage regulator (3) is configured in a first operating mode, when the regulated voltage level (V_{REG}), which is monitored by the monitoring means (2), is above a determined voltage threshold, or in a second operating mode, when the regulated voltage level is equal to or below the voltage threshold, the level of the regulated voltage (V_{REG}) supplied by the regulator in the second operating mode being lower than the level of the regulated voltage in the first operating mode, and **in that** the monitoring means (2) supply at least one control signal (V_{M}, V_{MR}, V_{MO}) directly or via the microprocessor unit (5), to configure the voltage regulator (3) and the oscillator (4) so that the frequency of the clock signals (CLK) produced by the oscillator is at a first frequency in the first operating mode, or at a second frequency in the second operating mode, the first frequency being higher than the second frequency.

3. Circuit according to any of claims 1 or 2 for assembly in a smart card, **characterized in that** the microprocessor unit (5) supplies an enable or disable signal (V_{C}) to the monitoring means (2) so as to enable or disable said monitoring means (2) when the electronic circuit is being powered by a power source of a smart card read apparatus.

4. Circuit according to any of claims 1 and 2, **characterized in that** the oscillator is an RC type oscillator, which is integrated with all the electronic elements of the electronic circuit in the same semiconductor structure.

5. Circuit according to claim 4, **characterized in that** the oscillator (4) includes a resistor unit (Rosc) that can be configured by a binary word (TRIM) supplied by the microprocessor unit (5) so as to alter the charge and discharge current source current values of a capacitor (Cosc) to adapt the frequency of the clock signals (CLK) produced by the oscillator.

6. Circuit according to claim 5, **characterized in that** the microprocessor unit (5) is programmed for supplying in succession to the oscillator (4) randomly defined binary words at different time intervals so that the frequency of the clock signals (CLK) changes as a function of each binary word (TRIM) received.

7. Circuit according to claim 1, **characterized in that** the monitoring means (2) include a resistive divider (R1, R2) for connection to the terminals (V_{DD}, V_{SS}) of an electric power source, and a comparator (10) that supplies at least one control signal (V_{M}, V_{MO}, V_{MR}) depending upon the comparison between a reference voltage (V_{BG}) originating from the voltage regulator (3) and an output voltage of the resistive divider, the control signal voltage level being in a first high state when the supply voltage level is below the determined voltage threshold, and being in a second low level when the supply voltage level is equal to or below the determined threshold voltage.

8. Circuit according to claim 2, **characterized in that** the monitoring means (2) include a resistive divider (R1, R2) connected between a regulated voltage supply terminal (V_{REG}) of the voltage regulator (3) and an earth terminal (V_{SS}), and a comparator (10) that supplies at least one control signal (V_{M}, V_{MO}, V_{MR}) depending upon the comparison between a reference voltage (V_{BG}) originating from the voltage regulator (3) and an output voltage of the resistive divider, the control signal voltage level being in a first, high state when the supply voltage level is below the determined voltage threshold, and being in a second, low state when the supply voltage level is equal to or below the determined threshold voltage.

9. Circuit according to any of claims 7 or 8, **characterized in that** the RC type oscillator (4) includes charge and discharge current sources of a capacitor (Cosc) and **in that** the value of the discharge and discharge currents depends upon the voltage level of the control signal (V_{M}) supplied to the oscillator, the charge and discharge current value being higher when the control signal is in the high state, than when the control signal is in the low state, so that the frequency of the clock signals (CLK) produced by the oscillator is dependent upon the level of the control signal.

10. Circuit according to any of claims 7 and 8, **characterized in that** at least one switch (11), controlled by an enable or disable signal (VC) supplied by the microprocessor unit (5), is placed at least in the resistive divider so as to connect or disconnect the monitoring means (2).

## Patentansprüche

1. Elektronische Schaltung, die eine Mikroprozessoreinheit (5), einen mit der Mikroprozessoreinheit verbundenen Oszillator (4), um Taktsignale (CLK) zu liefern, um in der Mikroprozessoreinheit ausgeführte Operationen zu takten, einen Spannungsregulierer (3), um eine regulierte Spannung (V_{REG}) zu liefern, und Mittel (2) zum Steuern des Pegels der Versorgungsspannung der elektronischen Schaltung umfasst, **dadurch gekennzeichnet, dass** der Spannungsregulierer (3) in einem ersten Funktionsmodus konfiguriert ist, wenn der Versorgungsspannungspegel, der durch die Steuermittel (2) gesteuert wird, über einer bestimmten Spannungsschwelle liegt, oder in einem zweiten Funktionsmodus konfiguriert ist, wenn der Versorgungsspannungspegel gleich oder kleiner als die Spannungsschwelle ist, wobei der von dem Regulierer in dem zweiten Funktionsmodus gelieferte regulierte Spannungspegel (V_{REG}) niedriger ist als der in dem ersten Funktionsmodus regulierte Spannungspegel, und dass die Steuermittel (2) wenigstens ein Steuersignal (V_{M}, V_{MR}, V_{MO}) direkt oder über die Mikroprozessoreinheit (5) liefern, um den Spannungsregulierer (3) und den Oszillator (4) in der Weise zu konfigurieren, dass die Frequenz der durch den Oszillator erzeugten Taktsignale (CLK) in dem ersten Funktionsmodus eine erste Frequenz ist oder in dem zweiten Funktionsmodus eine zweite Frequenz ist, wobei die erste Frequenz höher ist als die zweite Frequenz.

2. Elektronische Schaltung, die eine Mikroprozessoreinheit (5), einen mit der Mikroprozessoreinheit verbundenen Oszillator (4), um Taktsignale (CLK) zu liefern, um in der Mikroprozessoreinheit ausgeführte Operationen zu takten, einen Spannungsregulierer (3), um eine regulierte Spannung (V_{REG}) zu liefern, und Mittel (2) zum Steuern des Pegels der regulierten Spannung umfasst, **dadurch gekennzeichnet, dass** der Spannungsregulierer (3) in einem ersten Funktionsmodus konfiguriert ist, wenn der Pegel der regulierten Spannung (V_{REG}), der durch die Steuermittel (2) gesteuert wird, über einer bestimmten Spannungsschwelle liegt, oder in einem zweiten Funktionsmodus konfiguriert ist, wenn der Pegel der regulierten Spannung im ersten Funktionsmodus gleich oder kleiner als die Spannungsschwelle ist, wobei der Pegel der regulierten Spannung im zweiten Funktionsmodus kleiner ist als der Pegel der regulierten Spannung im ersten Funktionsmodus, und dass die Steuermittel (2) wenigstens ein Steuersignal (V_{M}, V_{MR}, V_{MO}) direkt oder über die Mikroprozessoreinheit (5) liefern, um den Spannungsregulierer (3) und den Oszillator (4) in der Weise zu konfigurieren, dass die Frequenz der durch den Oszillator erzeugten Taktsignale (CLK) entweder eine erste Frequenz im ersten Funktionsmodus oder eine zweite Frequenz im zweiten Frequenzmodus ist, wobei die erste Frequenz höher ist als die zweite Frequenz.

3. Schaltung nach einem der Ansprüche 1 und 2, die dazu bestimmt ist, in einer Chipkarte montiert zu werden, **dadurch gekennzeichnet, dass** die Mikroprozessoreinheit (5) an die Steuermittel (2) ein Einschalt- oder Ausschaltsignal (V_{C}) liefert, derart, dass die Steuermittel (2) funktionsfähig oder funktionslos gemacht werden, wenn die elektronische Schaltung durch eine Versorgungsquelle eines Chipkarten-Lesegeräts versorgt wird.

4. Schaltung nach einem der Ansprüche 1 und 2, **dadurch gekennzeichnet, dass** der Oszillator ein Oszillator des RC-Typs ist, der mit allen elektronischen Elementen der elektronischen Schaltung in derselben Halbleiterstruktur integriert ist.

5. Schaltung nach Anspruch 4, **dadurch gekennzeichnet, dass** der Oszillator (4) einen Block (R_{OSC}) von Widerständen umfasst, die durch ein von der Mikroprozessoreinheit (5) geliefertes Binärwort (TRIM) konfigurierbar sind, um den Stromwert der Stromquellen zum Laden und Entladen eines Kondensators (C_{OSC}) zu modifizieren, um die Frequenz der durch den Oszillator erzeugten Taktsignale (CLK) anzupassen.

6. Schaltung nach Anspruch 5, **dadurch gekennzeichnet, dass** die Mikroprozessoreinheit (5) programmiert ist, um nacheinander in unterschiedlichen Zeitintervallen an den Oszillator (4) zufällig definierte Binärwörter (TRIM) zu liefern, damit sich die Frequenz der Taktsignale (CLK) entsprechend jedem empfangenen Binärwort (TRIM) ändert.

7. Schaltung nach Anspruch 1, **dadurch gekennzeichnet, dass** die Steuermittel (2) einen resistiven Teiler (R1, R2), der dazu bestimmt ist, mit den Anschlüssen (V_{DD}, V_{SS}) einer elektrischen Versorgungsquelle verbunden zu werden, und einen Komparator (10), der wenigstens ein Steuersignal (V_{M}, V_{MO}, V_{MR}) entsprechend dem Vergleich zwischen einer Referenzspannung (V_{BG}), die vom Spannungsregulierer (3) stammt, und einer Ausgangsspannung des resistiven Teilers liefert, umfassen, wobei der Spannungspegel des Steuersignals in einem ersten, hohen Zustand ist, wenn der Versorgungsspannungspegel über der bestimmten Spannungsschwelle liegt, und in einem zweiten, niedrigen Zustand ist, wenn der Pegel der Versorgungsspannung gleich oder niedriger als die bestimmte Spannungsschwelle ist.

8. Schaltung nach Anspruch 2, **dadurch gekennzeichnet, dass** die Steuermittel (2) einen resistiven Teiler (R1, R2), der zwischen einen Anschluss für die Lieferung der regulierten Spannung (V_{REG}) des Spannungsregulierers (3) und einen Masseanschluss (V_{SS}) geschaltet ist, und einen Komparator (10), der wenigstens ein Steuersignal (V_{M}, V_{MO}, V_{MR}) entsprechend dem Vergleich zwischen der Referenzspannung (V_{BG}), die von dem Spannungsregulierer (3) stammt, und einer Ausgangsspannung des resistiven Teilers liefert, umfassen, wobei der Spannungspegel des Steuersignals in einem ersten, hohen Zustand ist, wenn der Pegel der regulierten Spannung über der bestimmten Spannungsschwelle liegt, und in einem zweiten, niedrigen Zustand ist, wenn der Pegel der regulierten Spannung gleich oder niedriger als die bestimmte Spannungsschwelle ist.

9. Schaltung nach einem der Ansprüche 7 und 8, **dadurch gekennzeichnet, dass** der Oszillator (4) des RC-Typs Stromquellen zum Laden und Entladen eines Kondensators (C_{OSC}) umfasst, dass der Wert des Ladungs- und des Entladungsstroms vom Spannungspegel des Steuersignals (V_{MO}) abhängt, das an den Oszillator geliefert wird, wobei der Wert des Lade- und des Entladestroms höher ist, wenn das Steuersignal im hohen Zustand ist als wenn das Steuersignal im niedrigen Zustand ist, damit die Frequenz der Taktsignale (CLK), die von dem Oszillator erzeugt werden, vom Pegel dieses Steuersignals abhängt.

10. Schaltung nach einem der Ansprüche 7 und 8, **dadurch gekennzeichnet, dass** wenigstens ein Ein/Aus-Schalter (11), der durch ein Einschalt- oder Ausschaltsignal (V_{C}) gesteuert wird, das von der Mikroprozessoreinheit (5) geliefert wird, wenigstens in dem resistiven Teiler angeordnet ist, um die Steuermittel (2) anzuschließen oder zu trennen.
